# FASCICULE DE BREVET EUROPEEN

(11) **EP 4 439 478 B1**
(45) Date de publication et mention de la délivrance du brevet: **11.11.2026**
(21) Numéro de dépôt: 24151285.4
(22) Date de dépôt: 11.01.2024
(51) Int. Cl.: G06V 10/25, G06V 20/54, G08G 1/015, G08G 1/052, G06T 7/246, G06V 10/20, G06V 10/44, G06T 7/20, G08G 1/01, G08G 1/017, G06N 3/0464, G06V 20/52

(54) **PROCÉDÉ DE SUIVI D'OBJETS MULTIPLES**
VERFAHREN ZUR VERFOLGUNG MEHRERER OBJEKTE
METHOD FOR TRACKING MULTIPLE OBJECTS

(30) Priorité: 28.03.2023 FR 2302975
(43) Date de publication de la demande: 02.10.2024
(73) Titulaire: IDEMIA Road Safety France, 92400 Courbevoie (FR)
(72) Inventeur: PERRAULT, Pierre, 92400 Courbevoie (FR); ASSERPE, Samuel, 92400 COURBEVOIE (FR); BOUATAY, Wassim, 92400 Courbevoie (FR)
(74) Mandataire: Plasseraud IP

(56) Documents cités:
- EP-A1- 3 096 292
- KR-A- 20180 097 944
- US-A1- 2019 065 895
- HUANG XIAOHUI XIAOHUIHUANG@UFL EDU ET AL: "Intelligent Intersection", ACM TRANSACTIONS ON SPATIAL ALGORITHMS AND SYSTEMS, ACM, 2 PENN PLAZA, SUITE 701 NEW YORK NY 10121-0701 USA, vol. 6, no. 2, 24 January 2020 (2020-01-24), pages 1 - 28, XP058692423, ISSN: 2374-0353, DOI: 10.1145/3373647

## Description

L'invention concerne un procédé de suivi d'objets multiples dans des acquisitions temporelles d'images, en particulier de véhicules dans un contexte routier, les images provenant notamment d'un dispositif de prise de vue fixe dont le champ de vision comprend une voie de circulation.

L'invention s'applique, notamment, à des domaines techniques tels que la sécurité pour l'identification des véhicules en infraction roulant à une vitesse élevée.

L'objectif du suivi d'objets multiples est d'identifier spatialement et temporellement les objets d'intérêt dans une séquence d'images, c'est-à-dire, pour chaque objet d'intérêt, de placer un cadre de délimitation autour de lui et de lui donner un identifiant unique de suivi cohérent dans le temps. En d'autres termes, chaque objet suivi est tracé et son traceur est représenté par une séquence temporelle de cadres de délimitation, sous forme par exemple de boîtes englobantes, chaque traceur possédant un identifiant unique de suivi.

Le document EP 3 096 292 A1 divulgue un exemple pertinent de méthode de suivi multi-objets.

Le suivi d'objets multiples exige également que l'algorithme de suivi soit en temps réel (appelé également "suivi en ligne"), ce qui signifie que les cadres de délimitation et les identifiants de suivi associés doivent être déterminés au plus tôt dès qu'une image est capturée (par exemple avec une latence inférieure à un seuil déterminé, notamment de cinq trames (ou images)).

Enfin, en général, les algorithmes de suivi permettent de prédire la position future des multiples objets mobiles sur la base de l'historique des positions individuelles.

Un point critique correspond donc à l'apparition d'un nouvel objet dans le champ de vision du dispositif d'acquisition d'images car l'objet est alors inconnu, sans vitesse déterminée, c'est-à-dire sans moyen d'estimer la localisation du prochain cadre dans l'image suivante. Cette phase est aussi nommée phase d'initialisation, elle est achevée quand le nouvel objet a pu être associé à un identifiant unique de suivi et sa vitesse courante déterminée.

Il est connu de l'état de la technique de tels procédés de suivi d'objets utilisant des méthodes d'initialisation géométrique des identifiants de suivi entre deux images acquises consécutivement, notamment au moyen de la détermination de score d'intersection sur l'union (ou IOU), tel que l'algorithme appelé SORT décrit dans l'article Simple Online and Realtime Tracking, de Bewley Alex, Ge Zongyuan, Ott, Lionel, Ramos Fabio et Upcroft Ben dans 2016 IEEE International Conference on Image Processing (ICIP), pages 3464-3468, mais ces méthodes ne permettent pas toujours d'initialiser suffisamment rapidement les identifiants de suivi, notamment quand la fréquence d'acquisition des images est faible au regard de la dynamique des objets mobiles suivis.

Des améliorations de ces méthodes ont été développées, on connait notamment la méthode d'initialisation géométrique hybride des identifiants de suivi dans laquelle l'appariement du traceur à son identifiant unique de suivi comporte une analyse comparative des objets des images par apprentissage profond utilisant des réseaux de neurones, tel que l'algorithme appelé DEEPSORT décrit dans l'article Simple Online and Realtime Tracking with a Deep Association Metric de Nicolai Wojke, Alex Bewley et Dietrich Paulus dans 2017 IEEE International Conference on Image Processing (ICIP), pages 3645--3649, cependant cette méthode est coûteuse en temps de calcul et rend le suivi plus lent.

La présente invention vise à pallier au moins en partie ces inconvénients, menant éventuellement à d'autres avantages; la-dite invention étant définie par les revendications indépendantes et complétée par les revendications dépendantes .

A cet effet, est proposé, selon un premier aspect, un procédé de suivi d'objets multiples dans des acquisitions temporelles d'images, notamment des vidéos monoculaires, composées d'une séquence temporelle d'images acquises consécutivement, ledit procédé comprenant :
- une étape de réception de n images acquises consécutivement de ladite séquence, n étant supérieur ou égal à 3;
- une étape de détection d'objet dans chacune desdites images, notamment au moyen d'un réseau de neurones convolutif ;
- une étape de délimitation de l'objet détecté, notamment par détermination d'un cadre de délimitation englobant ledit au moins un objet détecté, dans un référentiel de l'image dans laquelle ledit objet a été détecté ;
- une étape d'association sous un identifiant unique de suivi propre à un objet suivi d'un cadre de délimitation d'une première image de la séquence d'images à un cadre de délimitation d'une deuxième image de ladite séquence, lesdites première et deuxième images étant notamment consécutives, en fonction d'un seuil minimal de chevauchement ;
- une étape de détermination d'une vitesse courante dudit objet suivi ;
- une étape de détermination de cadre de délimitation d'objet détecté sans identifiant associé parmi les n images;
- une étape de détermination d'un ensemble de multiplets séquentiels candidats de k cadres de délimitation d'objet détecté sans identifiant, avec k supérieur ou égal à 3 et k inférieur ou égal à n, chaque multiplet comprenant comme premier élément un cadre sans identifiant d'une image h parmi les n images, comme deuxième élément un cadre sans identifiant d'une image i parmi les n images, avec i supérieur à h et comme troisième élément un cadre sans identifiant d'une image j parmi les n images, avec j supérieur à i;
- une étape de calcul d'un indice d'erreur de cohérence pour chaque multiplet séquentiel candidat ;
- une étape d'attribution au multiplet candidat ayant l'indice d'erreur de cohérence le plus faible, et notamment inférieur à un seuil d'erreur de cohérence prédéterminé, d'un autre identifiant unique de suivi propre à un autre objet suivi et association sous ledit autre identifiant unique de suivi desdits k cadres du multiplet; et
- une étape de détermination d'une vitesse courante dudit autre objet suivi.

Le procédé de suivi d'objets multiples selon l'invention permet d'améliorer les performances de suivi d'objet sans augmentation sensible du temps de calcul, et contribue à la robustesse lors de la phase d'initialisation du suivi d'objet en appariant rapidement le cadre de délimitation englobant chaque nouvel objet détecté apparaissant dans le champ de vision du système d'acquisition d'images à son identifiant unique de suivi.

En effet, le procédé de suivi d'objets selon l'invention permet l'initialisation rapide même en cas de non détection d'un objet dans une image de la séquence et d'associer sous un identifiant unique de suivi des détections issues d'images non consécutives mais cohérentes entre elles. En effet, lesdites première et deuxième images sont notamment consécutives mais ne le sont pas nécessairement.

Le procédé de suivi d'objets selon l'invention s'applique aussi bien à des séquences d'images sous forme de vidéos monoculaires acquises par un dispositif d'acquisition fixe, qu'à des séquences d'images acquises par lidar sous forme de nuages de points, que ce soit par un dispositif fixe ou mobile (dans un véhicule autonome par exemple, sous réserve de connaitre sa vitesse instantanée), ou qu'à une séquences d'images fusionnées provenant d'un dispositif d'acquisition radar et lidar par exemple, fixe ou mobile.

En outre, le procédé de suivi d'objets selon l'invention permet l'utilisation d'un référentiel en deux dimensions ou trois dimensions de l'image, c'est-à-dire de travailler soit en coordonnées pixeliques de l'image soit en trois dimensions, le calcul en trois dimensions permettant des calculs géométriques plus simple que dans un référentiel pixelique. Dans le cas de l'acquisition d'une image monoculaire, en deux dimensions, le passage en trois dimensions est permis par la connaissance de données de contexte, c'est-à-dire ici de l'environnement géométrique en cas de dispositif fixe acquises lors de la mise en place et la calibration du dispositif fixe. Dans le cas d'une acquisition initialement en trois dimensions (par exemple au moyen d'un lidar, d'un capteur temps de vol (ToF pour Time of Fly en anglais), capteur stéréoscopique ou lidar couplé à un radar), l'image reçue est déjà en trois dimensions. Dans le cas d'un référentiel en deux dimensions les cadres de délimitation sont notamment des rectangles et dans le cas d'un référentiel en trois dimensions les cadres de délimitation sont notamment des parallélépipèdes.

De plus, le procédé de suivi d'objets selon l'invention fait référence à un indice d'erreur de cohérence, de manière à raisonner en terme de minimisation d'erreur néanmoins un indice de cohérence pourrait également être utilisé et pour être retenu le multiplet devrait présenter l'indice de cohérence le plus élevé.

La répétition itérative en boucle des étapes ayant pour but d'affecter un identifiant unique de suivi au multiplet candidat ayant l'indice de cohérence d'erreur le plus faible, suit la logique d'un algorithme glouton et permet de n'associer un cadre qu'à un seul identifiant à puisque une fois le cadre associé à un identifiant celui-ci n'est plus déterminé comme un cadre de délimitation d'objet détecté sans identifiant associé.

Avantageusement, l'étape d'attribution et d'association est conditionnée par l'infériorité dudit indice d'erreur de cohérence le plus faible à un seuil d'erreur de cohérence prédéterminé, ce qui permet de ne pas apparier des objets sans rapport sous un identifiant unique de suivi.

Par exemple, le seuil d'erreur de cohérence prédéterminé est fixé en fonction des applications.

De manière avantageuse, pour chaque multiplet candidat l'indice d'erreur de cohérence est calculé en fonction d'un positionnement relatif desdits cadres sans identifiant dudit multiplet, ce qui permet un calcul de cohérence basé sur les considérations géométriques.

Avantageusement, le positionnement relatif desdits cadres sans identifiant dudit multiplet est déterminé relativement au positionnement d'un point unique de référence propre de chacun desdits cadres sans identifiant, ce qui facilite le calcul du positionnement relatif.

Avantageusement, en cas de dispositif d'acquisition fixe, le repère de positionnement est le référentiel de l'image dans laquelle ledit objet a été détecté, ce référentiel étant unique et identique pour toutes les images.

Par exemple, le point unique de référence d'un cadre est un point du cadre, notamment un point milieu d'un segment supérieur du cadre.

De manière avantageuse, le point unique de référence de chacun desdits cadres sans identifiant est le centre de chacun desdits cadres sans identifiant, ce qui permet d'être facilement déterminé, et moins sensible aux aléas d'acquisition qu'un coin du cadre dans le cas d'une image comportant une vue incomplète du véhicule, que ce soit lors de l'incursion partielle du véhicule dans le champ de vision du dispositif d'acquisition (en bord d'image) ou lors d'un dépassement par un autre véhicule le cachant partiellement.

De manière avantageuse, lesdits points uniques de référence propres à chacun desdits cadres sans identifiant sont déterminés par un réseau de neurones convolutif ayant appris sur une base d'images comportant des objets tronqués, ce qui donne plus de latitude sur la définition du point unique de référence du cadre car il peut alors être défini par exemple comme étant le centre de l'objet, sans être nécessairement géométriquement au centre du cadre.

Avantageusement, l'indice d'erreur de cohérence est calculé en fonction de k-1 vecteurs reliant chacun le point de référence d'un élément au point de référence de l'élément suivant, lesdits vecteurs étant notamment fonction d'une différence de temps entre les acquisitions des deux images, en appelant
- premier vecteur, le vecteur reliant le point de référence du premier élément et le point de référence du deuxième élément du multiplet, ledit premier vecteur étant notamment fonction d'une différence de temps entre les deux acquisitions des images h et i, et ;
- deuxième vecteur, le vecteur reliant le point de référence du deuxième élément et le point de référence du troisième élément du multiplet, ledit deuxième vecteur étant notamment fonction d'une différence de temps entre les deux acquisitions des images i et j,
ce qui permet de prendre en considération des alignements par paires, la prise en compte de la différence temporelle permettant de dimensionner une vitesse et notamment de s'adapter au cas d'un multiplet de trois éléments dont les éléments n'appartiennent pas à des images directement consécutives, ou dans le cas d'acquisition d'images avec échantillonnage temporel irrégulier par exemple.

Avantageusement chaque image reçue comporte l'horodatage de son instant d'acquisition dans le référentiel temporel du dispositif d'acquisition au moyen par exemple de métadonnées intégrées à ladite image.

Selon un mode de réalisation, l'indice d'erreur de cohérence est calculé en fonction d'un angle entre lesdits premier et deuxième vecteurs, et notamment d'un rapport entre le premier et le deuxième vecteur, tel que $IEC = \left(1-cos\left(α\right)\right) \left|1-\frac{\left|v1\right|}{\left|v2\right|}\right|$ , l'angle entre les deux vecteurs permettant d'apprécier leur colinéarité , et le rapport des vecteurs permettant d'apprécier leur grandeur relative.

Selon un autre mode de réalisation, l'indice d'erreur de cohérence est calculé en fonction de la moyenne *v̅* desdits k-1 vecteurs (vi) , tel que $IEC \left(v1,…,vk-1\right) = \frac{1}{k - 1} {\sum }_{i} \frac{\left‖vi-\overline{v}\right‖}{\left‖\overline{v}\right‖}$ , ce qui permet une approche symétrique et une application simple à des multiplets de plus de trois éléments.

Avantageusement, lesdits objets détectés sont des véhicules ou des piétons, ce qui permet une application à la détection des infractions routières ainsi qu'une application au suivi des piétons, pour lesquels il est fréquent que la fréquence d'acquisition d'images soit faible au regard de la dynamique de déplacement de l'objet.

L'invention propose également un produit programme d'ordinateur comprenant les instructions de programme mettant en œuvre les étapes du procédé de détermination selon l'invention, lorsque les instructions de programme sont exécutées par un ordinateur, présentant les mêmes avantages que le procédé selon l'invention.

L'invention vise également un système de suivi d'objets multiples comportant un dispositif d'acquisition d'images et un produit programme d'ordinateur selon l'invention, présentant les mêmes avantages que ceux du procédé selon l'invention. Préférentiellement, ledit produit programme d'ordinateur est mémorisé dans une mémoire du dispositif d'acquisition d'images, ce dernier comportant notamment une caméra monoculaire.

Avantageusement ledit système de suivi d'objets multiples est fixe.

L'invention sera bien comprise et ses avantages apparaitront mieux à la lecture de la description détaillée qui suit, donnée à titre indicatif et nullement limitatif, en référence aux dessins annexés dans lesquels :
- [Fig. 1] La figure 1 montre schématiquement les étapes du procédé de l'invention selon un exemple.
- [Fig. 2] La figure 2 présente un exemple d'image sans chevauchement entre les cadres de quatre images acquises consécutivement.
- [Fig. 3] La figure 3 présente un exemple de triplet.
- [Fig. 4] La figure 4 est un bloc-diagramme schématique d'un dispositif de traitement de l'information pour la mise en œuvre d'un ou plusieurs modes de réalisation de l'invention.

Les éléments identiques représentés sur les figures précitées sont identifiés par des références numériques identiques.

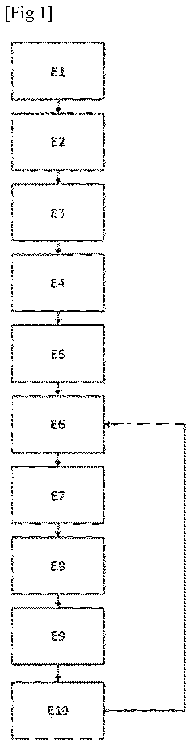

La figure 1 présente schématiquement les étapes d'un procédé de suivi d'objets multiples dans des acquisitions temporelles d'images selon l'invention.

Les acquisitions temporelles d'images sont composées d'une séquence temporelle d'images acquises consécutivement.

Ces images peuvent notamment provenir de vidéos monoculaires, ou de systèmes d'acquisition d'images (par exemple sous forme de nuages de points) en 3 dimensions (par exemple lidar, capteur temps de vol, capteur stéréoscopique, combiné de radar et lidar).

Le procédé comprend les étapes suivantes:
- une étape E1 de réception de n images acquises consécutivement de ladite séquence, n étant supérieur ou égal à 3;
- une étape E2 de détection d'objet dans chacune desdites images, notamment au moyen d'un réseau de neurones convolutif ;
- une étape E3 de délimitation de l'objet détecté, notamment par détermination d'un cadre de délimitation englobant ledit au moins un objet détecté, dans un référentiel de l'image dans laquelle ledit objet a été détecté ;
- une étape E4 d'association sous un identifiant unique de suivi propre à l'objet suivi d'un cadre de délimitation d'une première image de la séquence d'images à un cadre de délimitation d'une deuxième image de ladite séquence, lesdites première et deuxième images étant notamment consécutives (mais pas nécessairement), en fonction d'un seuil minimal de chevauchement ;
- une étape E5 de détermination d'une vitesse courante dudit objet suivi ;
- une étape E6 de détermination de cadre de délimitation d'objet détecté sans identifiant associé parmi les n images, comprenant notamment les images appelées ici h, i et j,;
- une étape E7 de détermination d'un ensemble de multiplets séquentiels candidats de k cadres (d1, d2, d3) de délimitation d'objet détecté sans identifiant, chaque multiplet comprenant k éléments, avec k supérieur ou égal à 3 et k inférieur ou égal à n, chaque multiplet comprenant comme premier élément un cadre sans identifiant d'une image h, comme deuxième élément un cadre sans identifiant d'une image i, avec i>h et comme troisième élément un cadre sans identifiant d'une image j avec j>i;
- une étape E8 de calcul d'un indice d'erreur de cohérence pour chaque multiplet séquentiel candidat ;
- une étape E9 d'attribution au multiplet candidat ayant l'indice d'erreur de cohérence le plus faible, et notamment inférieur à un seuil prédéterminé, d'un autre identifiant unique de suivi et association sous ledit autre identifiant unique de suivi desdits k cadres des n images du multiplet ; et
- une étape E10 de détermination d'une vitesse courante dudit autre objet suivi.

Les étapes E2 de détection d'objet et E3 de délimitation de chaque objet détecté sont exécutées sur chaque image reçue, la détection des objets dans chaque image étant notamment réalisée de manière connue par intelligence artificielle, au moyen de réseaux de neurones convolutif, tel que décrit dans l'article You Only Look Once: Unified, Real-Time Object Detection, de Joseph Redmon, Santosh Divvala, Ross Girshick et Ali Farhadi, dans 2016 IEEE Conference on Computer Vision and Pattern Recognition (CVPR), Las Vegas, NV, USA, 2016, pages 779-788.

Ces deux étapes E2 de détection d'objet et E3 de délimitation de chaque objet détecté peuvent être exécutées simultanément, notamment par un seul réseau de neurones, l'ordre de ces deux étapes peut également être inversé.

Les étapes ultérieures, de E4 à E9 sont plus précisément dédiées à la phase d'initialisation du suivi d'objet, c'est-à-dire quand un nouvel objet apparait dans le champ de vision du dispositif d'acquisition et n'a pas encore d'identifiant de suivi ni de vitesse connue.

L'étape E4 d'association par appariement séquentiel est connue et repose sur une comparaison de chevauchement de cadres de délimitation entre lesdites deux images, et ensuite sur association d'un cadre de délimitation de la première image à un cadre de délimitation de la deuxième image en fonction d'un seuil minimal de chevauchement.

L'évaluation du chevauchement repose sur une analyse de proximité et/ou de taux de recouvrement, par exemple au moyen de l'évaluation du rapport de l'aire de l'intersection des cadres divisé par l'aire de l'union des cadres (également dénommée IoU) entre les deux cadres appartenant chacun à une desdites deux images notamment avec un seuil de 0,3.

Si le nouvel objet apparu dans le champ de vision du dispositif d'acquisition est notamment trop rapide ou n'est par exemple pas détecté dans la deuxième image acquise, car l'objet est par exemple caché par un autre objet, l'objet ne pourra alors être associé à aucun cadre lors de cette étape E4 d'association. A l'issue de l'étape E4, il demeurera alors des cadres non appariés dans les images.

Les étapes suivantes E6 à E9 visent à réduire, dans cette phase d'initialisation, le nombre de cadres non appariés restant dans les images, et ainsi améliorer le suivi des objets dans la séquence. Pour ce faire, on procède itérativement aux étapes E6 à E9, si bien qu'une fois que le multiplet à indice d'erreur de cohérence le plus faible et préférentiellement inférieur à un seuil d'erreur de cohérence prédéterminé, les cadres de ce multiplet sont associés sous un identifiant unique de suivi propre à cet objet, la vitesse de cet objet déterminé, puis de manière itérative on détermine le multiplet suivant le plus prometteur sur la base des cadres sans identifiant restant et ainsi de suite jusqu'à ce que plus aucun multiplet ne satisfasse la condition liée au seuil d'erreur de cohérence.

Ce procédé permet de mieux initialiser le suivi des nouveaux objets, ce qui revêt toute son importance à la mise en route du système mais aussi de manière continue lorsqu'un nouvel objet apparait dans le champ de vision du dispositif d'acquisition, car sans initialisation du traceur l'objet ne peut pas être suivi.

En effet, cette initialisation par multiplet (k-uplets avec k supérieur ou égal à 3) permet de mieux suivre les objets rapides pour lesquels une phase d'initialisation basée sur une analyse de chevauchement n'aboutissait pas, tout en garantissant la robustesse et en évitant les appariements erronés puisque s'il serait probable d'avoir deux détections consécutives cohérentes pour initialiser un traceur alors qu'en réalité, ces détections ne correspondent pas au même objet, il est beaucoup moins probable que trois ou plus détections consécutives (quand bien même les images comportant chacune de ces détection ne sont pas consécutives) soient cohérentes par hasard. Préférentiellement, k est choisi proche de n, par exemple pour n=6, k pourrait être égal à 4

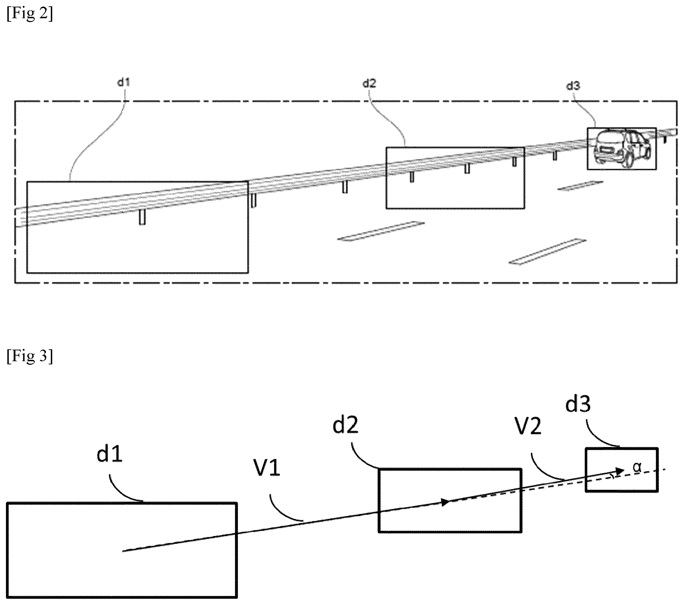

La figure 2 illustre l'application de l'invention au suivi d'objet en mouvement et plus précisément ici de véhicules dans le cadre du contrôle routier néanmoins d'autres applications sont envisageables, notamment pour d'autre type de véhicules que des automobiles. Sur la figure est représentée une image prise au temps t3 à laquelle ont été superposés :
- le cadre d1 de délimitation de l'objet détecté dans l'image t1, qui est ici la première image dans laquelle un objet est détecté,
- le cadre d2 de délimitation de l'objet détecté dans l'image t2,
- le cadre d3 de délimitation de l'objet détecté dans l'image t3.

En appliquant la méthode classique d'initialisation d'un traceur, s'arrêtant à l'étape E4 aucune association n'aurait pu ici être effectuée puisqu'aucun chevauchement n'existe entre lesdits cadres d1et d2 (ni d2 et d3) des trois images acquises consécutivement. Au temps t3 l'objet n'aurait donc toujours pas pu être suivi.

Dans l'exemple illustré ici, in fine, après quelques pas de temps supplémentaires la perspective aurait pu permettre une initialisation du suivi de l'objet en appliquant l'étape E4 car un recouvrement aurait fini par exister mais ceci n'est pas toujours le cas et l'initialisation est alors potentiellement effectuée trop tardivement pour dresser un procès-verbal avec les informations de plaques requises.

Le procédé se poursuit alors avec l'étape E6 (puisqu'ici aucun objet n'a pu être suivi, l'étape E5 est donc sans objet) de détermination de cadre de délimitation d'objet détecté sans identifiant associé parmi les trois images; c'est-à-dire ici les cadres d1, d2 et d3.

Ici l'application de l'étape E7 de détermination d'un ensemble de multiplets séquentiels candidats desdits cadres de délimitation d'objet détecté sans identifiant, ne concerne qu'un triplet (d1,d2,d3). Une détection ayant pu être faite sur chaque image, il y a ici autant de cadres que d'images.

Selon le mode de réalisation illustré en figure 3, à l'étape E8 l'indice d'erreur de cohérence pour ce triplet séquentiel candidat est ici calculé en fonction de 2 vecteurs v1, v2 représentés sous forme de flèches et reliant chacun le point de référence d'un élément au point de référence de l'élément suivant, lesdits vecteurs v1, v2 étant notamment fonction d'une différence de temps entre les acquisitions des deux images, en appelant
- premier vecteur v1 , le vecteur reliant le point de référence du premier élément d1 et le point de référence du deuxième élément d2 du triplet, ledit premier vecteur étant notamment fonction d'une différence de temps entre les deux acquisitions des images h et i, et ;
- deuxième vecteur v2, le vecteur reliant le point de référence du deuxième élément d2 et le point de référence du troisième élément d3 du multiplet, ledit deuxième vecteur étant notamment fonction d'une différence de temps entre les deux acquisitions des images i et j.

Plus précisément le calcul de l'indice d'erreur de cohérence IEC est ici fonction d'un angle α entre lesdits premier v1 et deuxième v2 vecteurs, et notamment d'un rapport entre le premier v1 et le deuxième v2 vecteur, tel que *IEC =* $\left(1-cos\left(α\right)\right) \left|1-\frac{\left|v1\right|}{\left|v2\right|}\right|$.

L'angle α entre les deux vecteurs v1, v2 permet d'apprécier leur colinéarité, il est représenté entre le vecteur v2 et la ligne en trait pointillé colinéaire à v1. Le premier facteur 1 - cos (*α*) exprimant que les deux vecteurs doivent être alignés, et le second facteur $\left|1-\frac{\left|v1\right|}{\left|v2\right|}\right|$ exprime qu'ils doivent avoir la même norme, le rapport des vecteurs permettant d'apprécier leur grandeur relative.

La prise en compte de la différence de temps en définissant chaque vecteur comme le ratio d'une distance entre deux points de référence sur la différence de temps entre les acquisitions des deux images afférentes permet de dimensionner un vecteur vitesse, et d'être ainsi robuste aux cas dans lesquels les cadres du multiplet proviendraient d'images non acquises régulièrement ou non consécutives acquises avec régularité (cas d'une non détection sur une des images acquises).

Dans l'exemple illustré en figure 3 le point de référence choisi du cadre est le centre dudit cadre.

Puis l'exécution de l'étape E9 attribue au multiplet candidat ayant l'indice d'erreur de cohérence IEC le plus faible et inférieur à un seuil d'erreur de cohérence prédéterminé un autre identifiant unique de suivi et associe sous ledit autre identifiant unique de suivi propre à ce nouvel objet suivi lesdits cadres d1,d2 et d3 des n images du triplet.

Dans l'exemple illustré, le triplet cohérent est un triplet tel que les trois cadres d1, d2, d3 de détection sont alignés et uniformément distants, avec un seuil d'erreur de cohérence prédéterminé. Pour l'application du procédé de suivi à des véhicules dans le cadre du contrôle routier le seuil d'erreur de cohérence prédéterminé est par exemple ici fixé à 0.01 pour k=3 et une vitesse d'acquisition de 15 images par seconde, puisque dans ce cas d'application si on considère un temps court de l'ordre de 0,1s, à grande vitesse il n'est pas possible pour le véhicule de changer sensiblement de direction ou de vitesse.

Selon un autre mode de réalisation, l'indice d'erreur de cohérence IEC est calculé selon $IEC \left(v1,…,vk-1\right) = \frac{1}{k - 1} {\sum }_{i} \frac{\left‖vi-\overline{v}\right‖}{\left‖\overline{v}\right‖}$ avec v⁻ la moyenne desdits k-1 vecteurs vi, ce qui se serait écrit dans le cas d'un triplet : $IEC \left(v1,v2\right) = \frac{1}{2} ⋅ \left(\frac{\left‖v1-\overline{v}\right‖}{\left‖\overline{v}\right‖}+\frac{\left‖v2-\overline{v}\right‖}{\left‖\overline{v}\right‖}\right)$

Cette hypothèse de cohérence peut également être exprimée par le fait que les vecteurs v1 et v2 doivent être approximativement les mêmes, et donc être égales à leur moyenne. Un autre intérêt de ce mode de calcul de l'indice d'erreur de cohérence IEC est qu'elle est symétrique par rapport à v1 et v2, et ne s'annule que lorsque v1=v2.

Pour des raisons de clarté, le procédé de suivi d'objets selon l'invention a été ici illustré avec un triplet mais se généralise aisément aux quadruplet, quintuplet, etc.

L'intérêt de considérer des k-uplets avec k supérieur à 3 est double :
- plus le nombre d'éléments du multiplet est élevé plus le niveau de confiance dans les traceurs initialisés de cette manière est élevé, car ils sont moins susceptibles d'être le fruit du hasard ;
- ils permettent qu'une détection manque (ce qui peut arriver fréquemment, car le détecteur n'est pas parfait) : par exemple, pour une initialisation de quadruplets, parmi les quatre derniers ensembles de détections, on peut regarder les quadruplets consécutifs, mais aussi les ensembles de triplets dans lequel les cadres proviennent de trois sur quatre acquisitions et n'appartiennent donc pas à des images acquises toutes consécutivement. En effet, les vi étant définis par le rapport entre une distance et une différence de temps, leur estimation n'est pas perturbée en les calculant sur des trames non consécutives.

Préférentiellement, k est inférieur ou égal à 7 de manière à ne pas augmenter sensiblement le temps de calcul, ni retarder trop le moment de l'initialisation et de manière à maintenir la cohérence avec l'hypothèse d'alignement qui pourrait ne plus être appropriée à l'application si k est trop élevé (par exemple un véhicule pourrait tourner).

Dans le cas où le dispositif d'acquisition est mobile, la connaissance de sa vitesse instantanée est requise (estimée ou mesurée) de manière à compenser le repère de positionnement par le mouvement du dispositif.

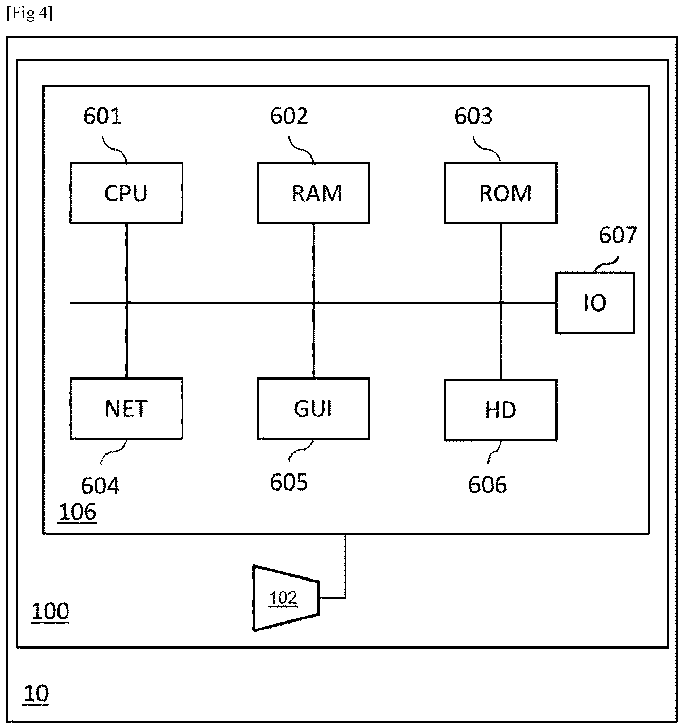

La figure 4 est un exemple de bloc-diagramme schématique d'un système 10 de suivi d'objets multiples comportant un dispositif 100 d'acquisition d'images comprenant un dispositif de traitement de l'information 106 dans lequel un produit programme d'ordinateur selon l'invention est mémorisé. Le dispositif de traitement de l'information 106 est apte à la mise en œuvre d'un ou plusieurs modes de réalisation de l'invention.

Le système 100 d'acquisition est contrôlé par un dispositif de traitement de l'information 106 qui permet par exemple de contrôler la caméra monoculaire 102. Le dispositif de traitement de l'information 106 reçoit et traite les images reçues de la caméra 102. Le dispositif de traitement de l'information 106 est typiquement un périphérique tel qu'un micro-ordinateur, un terminal mobile de télécommunication ou tout autre dispositif permettant l'exécution d'un programme informatique en charge du contrôle de la caméra, de l'acquisition des images et des différentes étapes du procédé selon l'invention.

Dans certains modes de réalisation, la caméra monoculaire 102 peut être complétée ou remplacée par des capteurs annexes contribuant à l'acquisition d'images en trois dimensions, comme, par exemple un capteur de temps de vol, un radar, un lidar ou tout autre capteur.

Le dispositif 106 comporte un bus de communication connecté à:
- une unité centrale de traitement 601, tel qu'un microprocesseur, notée CPU;
- une mémoire à accès aléatoire 602, notée RAM, pour mémoriser le code exécutable du procédé de réalisation de l'invention ainsi que les registres adaptés à enregistrer des variables et des paramètres nécessaires pour la mise en œuvre du procédé selon des modes de réalisation de l'invention ; la capacité de mémoire du dispositif peut être complétée par une mémoire RAM optionnelle connectée à un port d'extension, par exemple;
- une mémoire morte 603, notée ROM, pour stocker des programmes informatiques pour la mise en œuvre des modes de réalisation de l'invention;
- une interface réseau 604, notée NET, est normalement connectée à un réseau de communication sur lequel des données numériques à traiter sont transmis ou reçus. L'interface réseau 604 peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lues à partir de l'interface de réseau pour la réception sous le contrôle de l'application logiciel exécuté dans le processeur 601 ;
- une interface utilisateur 605 pour recevoir des entrées d'un utilisateur ou pour afficher des informations à un utilisateur ;
- un dispositif de stockage 606 tel que décrit dans l'invention et noté HD ;
- un module d'entrée/sortie 607 pour la réception / l'envoi de données depuis / vers des périphériques externes tels que disque dur, support de stockage amovible ou autres.

Le code exécutable peut être stocké dans une mémoire non volatile 603, par exemple une mémoire flash ou une mémoire morte, sur le dispositif de stockage 606 ou sur un support amovible numérique tel que par exemple un disque. Selon une variante, le code exécutable des programmes peut être reçu au moyen d'un réseau de communication, via l'interface réseau 604, afin d'être stocké dans l'un des moyens de stockage du dispositif de communication 600, tel que le dispositif de stockage 606, avant d'être exécuté.

L'unité centrale de traitement 601 est adaptée pour commander et diriger l'exécution des instructions ou des portions de code logiciel du programme ou des programmes selon l'un des modes de réalisation de l'invention, instructions qui sont stockées dans l'un des moyens de stockage précités. Après la mise sous tension, le CPU 601 est capable d'exécuter des instructions de la mémoire RAM principale 602, relatives à une application logicielle. Un tel logiciel, lorsqu'il est exécuté par le processeur 601, provoque l'exécution des procédés décrits.

Dans ce mode de réalisation, le dispositif de traitement de l'information 106 est un appareil programmable qui utilise un logiciel pour mettre en œuvre l'invention. Toutefois, à titre subsidiaire, la présente invention peut être mise en œuvre dans le matériel (par exemple, sous la forme d'un circuit intégré spécifique ou ASIC (de l'anglais application-specific integrated circuit) ou sous la forme d'un composant logique programmable ou FPGA (de l'anglais field-programmable gate array).

Bien que la présente invention ait été décrite ci-dessus en référence à des modes de réalisation spécifiques, la présente invention est susceptible de modifications évidentes pour une personne versée dans l'art.

## Revendications

1. Procédé de suivi d'objets multiples dans des acquisitions temporelles d'images composées d'une séquence temporelle d'images acquises consécutivement, ledit procédé comprenant :
- une étape (E1) de réception de n images acquises consécutivement de ladite séquence, n étant supérieur ou égal à 3;
- une étape (E2) de détection d'objet dans chacune desdites images;
- une étape (E3) de délimitation de l'objet détecté, dans un référentiel de l'image dans laquelle ledit objet a été détecté ;
- une étape (E4) d' association sous un identifiant unique de suivi propre à un objet suivi d'un cadre de délimitation d'une première image de la séquence d'images à un cadre de délimitation d'une deuxième image de ladite séquence, lesdites première et deuxième images étant notamment consécutives, en fonction d'un seuil minimal de chevauchement ;
- une étape (E5) de détermination d'une vitesse courante dudit objet suivi ;
ledit procédé étant **caractérisé en ce qu'**il comprend l'itération des étapes suivantes reposant sur base des cadres sans identifiant restant jusqu' à ce que plus aucun multiplet ne satisfasse une condition liée à un seuil d'erreur de cohérence:
- une étape (E6) de détermination de cadre de délimitation d'objet détecté sans identifiant associé parmi les n images;
- une étape (E7) de détermination d'un ensemble de multiplets séquentiels candidats de k cadres (d1, d2, d3) de délimitation d'objet détecté sans identifiant,, avec k supérieur ou égal à 3 et k inférieur ou égal à n, chaque multiplet comprenant comme premier élément un cadre (d1) sans identifiant d'une image h parmi les n images, comme deuxième élément un cadre (d2) sans identifiant d'une image i parmi les n images, avec i supérieur à h et comme troisième élément un cadre (d3) sans identifiant d'une image j parmi les n images ,avec j supérieur à i;
- une étape (E8) de calcul d'un indice d'erreur de cohérence (IEC) pour chaque multiplet séquentiel candidat ;
- une étape (E9) d'attribution au multiplet candidat ayant l'indice d'erreur de cohérence (IEC) le plus faible d'un autre identifiant unique de suivi propre à un autre objet suivi et association sous ledit autre identifiant unique de suivi desdits k cadres (d1,d2,d3) du multiplet ; et
- une étape (E10) de détermination d'une vitesse courante dudit autre objet suivi.

2. Procédé de suivi d'objets multiples selon la revendication précédente dans lequel pour chaque multiplet candidat l'indice d'erreur de cohérence (IEC) est calculé en fonction d'un positionnement relatif desdits cadres (d1, d2, d3) sans identifiant dudit multiplet.

3. Procédé de suivi d'objets multiples selon la revendication précédente dans lequel le positionnement relatif desdits cadres (d1, d2, d3) sans identifiant dudit multiplet est déterminé relativement au positionnement d'un point unique de référence propre à chacun desdits cadres (d1, d2, d3) sans identifiant.

4. Procédé de suivi d'objets multiples selon la revendication précédente dans lequel le point unique de référence de chacun desdits cadres (d1, d2, d3) sans identifiant est le centre de chacun desdits cadres (d1, d2, d3) sans identifiant.

5. Procédé de suivi d'objets multiples selon l'une quelconque des revendications 3, 4 dans lequel lesdits points uniques de référence propres à chacun desdits cadres (d1, d2, d3) sans identifiant sont déterminés par un réseau de neurones convolutif ayant appris sur une base d'images comportant des objets tronqués.

6. Procédé de suivi d'objets multiples selon l'une quelconque des revendications 3 à 5 dans lequel l'indice d'erreur de cohérence (IEC) est calculé en fonction de k-1 vecteurs (v1, v2) reliant chacun le point de référence d'un élément au point de référence de l'élément suivant, lesdits vecteurs (v1, v2) étant notamment fonction d'une différence de temps entre les acquisitions des deux images, en appelant
- premier vecteur (v1) , le vecteur reliant le point de référence du premier élément (d1) et le point de référence du deuxième élément (d2) du multiplet, ledit premier vecteur étant notamment fonction d'une différence de temps entre les deux acquisitions des images h et i, et ;
- deuxième vecteur (v2), le vecteur reliant le point de référence du deuxième élément (d2) et le point de référence du troisième élément (d3) du multiplet, ledit deuxième vecteur étant notamment fonction d'une différence de temps entre les deux acquisitions des images i et j.

7. Procédé de suivi d'objets multiples selon la revendication précédente dans lequel l'indice d'erreur de cohérence (IEC) est calculé en fonction d'un angle (α) entre lesdits premier (v1) et deuxième (v2) vecteurs, et notamment d'un rapport entre le premier et le deuxième vecteur, tel que $IEC = \left(1-cos\left(α\right)\right) \left|1-\frac{\left|v1\right|}{\left|v2\right|}\right|$.

8. Procédé de suivi d'objets multiples selon la revendication 6 dans lequel l'indice d'erreur de cohérence (IEC) est calculé en fonction de la moyenne *v̅* desdits k-1 vecteurs (vi) , tel que $IEC \left(v1,…,vk-1\right) = \frac{1}{k - 1} {\sum }_{i} \frac{\left‖vi-\overline{v}\right‖}{\left‖\overline{v}\right‖}$ .

9. Procédé de suivi d'objets multiples selon l'une quelconque des revendications précédentes dans lequel lesdits objets détectés sont des véhicules ou des piétons.

10. Procédé de suivi d'objets multiples selon l'une quelconque des revendications précédentes dans lequel les acquisitions temporelles d'images sont des vidéos monoculaires.

11. Procédé de suivi d'objets multiples selon l'une quelconque des revendications précédentes dans lequel l'étape (E2) de détection d'objet dans chacune desdites images est réalisée au moyen d'un réseau de neurones convolutif.

12. Procédé de suivi d'objets multiples selon l'une quelconque des revendications précédentes dans lequel l'étape (E3) de délimitation de l'objet détecté comporte la détermination d'un cadre de délimitation englobant ledit au moins un objet détecté.

13. Procédé de suivi d'objets multiples selon l'une quelconque des revendications précédentes dans lequel à l' étape (E9) d'attribution au multiplet candidat ayant l'indice d'erreur de cohérence (IEC) le plus faible, ledit indice d'erreur de cohérence (IEC) le plus faible est inférieur à un seuil d'erreur de cohérence prédéterminé.

14. Produit programme d'ordinateur comprenant les instructions de programme mettant en œuvre les étapes du procédé de détermination selon l'une quelconque des revendications 1 à 13, lorsque les instructions de programme sont exécutées par un ordinateur.

## Patentansprüche

1. Verfahren zur Verfolgung mehrerer Objekte in zeitlichen Aufnahmen von Bildern, welche aus einer zeitlichen Sequenz von aufeinanderfolgend aufgenommenen Bildern bestehen, wobei das Verfahren umfasst:
- einen Schritt (E1) des Empfangens von n aufeinanderfolgend aufgenommenen Bildern der Sequenz, wobei n größer oder gleich 3 ist;
- einen Schritt (E2) der Objektdetektion in jedem der Bilder;
- einen Schritt (E3) der Begrenzung des detektierten Objekts in einem Bezugssystem des Bildes, in dem das Objekt detektiert wurde;
- einen Schritt (E4) der Zuordnung unter einer eindeutigen Verfolgungs-Kennung, welche einem verfolgten Objekt von einem Begrenzungsrahmen eines ersten Bildes der Sequenz zu einem Begrenzungsrahmen eines zweiten Bildes der Sequenz zugeordnet ist, wobei das erste und das zweite Bild insbesondere aufeinanderfolgend sind, in Abhängigkeit von einem minimalen Überlappungsschwellenwert;
- einen Schritt (E5) der Bestimmung einer aktuellen Geschwindigkeit des verfolgten Objekts;
wobei das Verfahren **dadurch gekennzeichnet ist, dass** es die Iteration der folgenden Schritte umfasst, welche auf Basis der verbleibenden Rahmen ohne Kennung beruhen, bis kein Tupel mehr eine Bedingung erfüllt, welche mit einem Kohärenzfehlerschwellenwert zusammenhängt:
- einen Schritt (E6) der Bestimmung eines Begrenzungsrahmens eines detektierten Objekts ohne zugeordnete Kennung unter den n Bildern;
- einen Schritt (E7) der Bestimmung einer Menge sequenzieller Kandidaten-Tupel von k Begrenzungsrahmen (d1, d2, d3) eines detektierten Objekts ohne Kennung, wobei k größer oder gleich 3 und k kleiner oder gleich n ist, wobei jedes Tupel als erstes Element einen Rahmen (d1) ohne Kennung eines Bildes h unter den n Bildern umfasst, als zweites Element einen Rahmen (d2) ohne Kennung eines Bildes i unter den n Bildern, wobei i größer als h ist, und als drittes Element einen Rahmen (d3) ohne Kennung eines Bildes j unter den n Bildern, wobei j größer als i ist;
- einen Schritt (E8) der Berechnung eines Kohärenzfehlerindex (IEC) für jedes sequenzielle Kandidaten-Tupel;
- einen Schritt (E9) der Zuweisung an das Kandidaten-Tupel, welches den niedrigsten Kohärenzfehlerindex (IEC) aufweist, einer anderen eindeutigen Verfolgungs-Kennung, welche einem anderen verfolgten Objekt zugeordnet ist, und Zuordnung unter der anderen eindeutigen Verfolgungs-Kennung der k Rahmen (d1, d2, d3) des Tupels; und
- einen Schritt (E10) der Bestimmung einer aktuellen Geschwindigkeit des anderen verfolgten Objekts.

2. Verfahren zur Verfolgung mehrerer Objekte nach dem vorangegangenen Anspruch, wobei für jedes Kandidaten-Tupel der Kohärenzfehlerindex (IEC) berechnet wird in Abhängigkeit von einer relativen Positionierung der Rahmen (d1, d2, d3) ohne Kennung des Tupels.

3. Verfahren zur Verfolgung mehrerer Objekte nach dem vorangegangenen Anspruch, wobei die relative Positionierung der Rahmen (d1, d2, d3) ohne Kennung des Tupels relativ zur Positionierung eines einzelnen Bezugspunkts bestimmt wird, welcher jedem der Rahmen (d1, d2, d3) ohne Kennung zugeordnet ist.

4. Verfahren zur Verfolgung mehrerer Objekte nach dem vorangegangenen Anspruch, wobei der einzelne Bezugspunkt jedes der Rahmen (d1, d2, d3) ohne Kennung das Zentrum jedes der Rahmen (d1, d2, d3) ohne Kennung ist.

5. Verfahren zur Verfolgung mehrerer Objekte nach einem der Ansprüche 3 oder 4, wobei die einzelnen Bezugspunkte, welche jedem der Rahmen (d1, d2, d3) ohne Kennung zugeordnet sind, durch ein Convolutional Neural Network bestimmt werden, welches auf einer Basis von Bildern gelernt hat, welche abgeschnittene Objekte umfassen.

6. Verfahren zur Verfolgung mehrerer Objekte nach einem der Ansprüche 3 bis 5, wobei der Kohärenzfehlerindex (IEC) in Abhängigkeit von k-1 Vektoren (v1, v2) berechnet wird, welche jeweils den Bezugspunkt eines Elements mit dem Bezugspunkt des folgenden Elements verbinden, wobei die Vektoren (v1, v2) insbesondere von einer Zeitdifferenz zwischen den Aufnahmen der beiden Bilder abhängen, wobei:
- als erster Vektor (v1) der Vektor bezeichnet wird, welcher den Bezugspunkt des ersten Elements (d1) und den Bezugspunkt des zweiten Elements (d2) des Tupels verbindet, wobei der erste Vektor insbesondere von einer Zeitdifferenz zwischen den beiden Aufnahmen der Bilder h und i abhängt, und;
- als zweiter Vektor (v2) der Vektor bezeichnet wird, welcher den Bezugspunkt des zweiten Elements (d2) und den Bezugspunkt des dritten Elements (d3) des Tupels verbindet, wobei der zweite Vektor insbesondere von einer Zeitdifferenz zwischen den beiden Aufnahmen der Bilder i und j abhängt.

7. Verfahren zur Verfolgung mehrerer Objekte nach dem vorangegangenen Anspruch, wobei der Kohärenzfehlerindex (IEC) in Abhängigkeit von einem Winkel (α) zwischen dem ersten (v1) und dem zweiten (v2) Vektor und insbesondere von einem Verhältnis zwischen dem ersten und dem zweiten Vektor berechnet wird, derart dass $IEC = \left(1-cos\left(α\right)\right) \left|1-\frac{\left|v1\right|}{\left|v2\right|}\right| .$

8. Verfahren zur Verfolgung mehrerer Objekte nach Anspruch 6, wobei der Kohärenzfehlerindex (IEC) in Abhängigkeit vom Mittelwert *v̅* der k-1 Vektoren (vi) berechnet wird, derart dass $IEC \left(v1,…,vk-1\right) = \frac{1}{k - 1} {\sum }_{i} \frac{\left‖vi-\overline{v}\right‖}{\left‖\overline{v}\right‖}$.

9. Verfahren zur Verfolgung mehrerer Objekte nach einem der vorangegangenen Ansprüche, wobei die detektierten Objekte Fahrzeuge oder Fußgänger sind.

10. Verfahren zur Verfolgung mehrerer Objekte nach einem der vorangegangenen Ansprüche, wobei die zeitlichen Aufnahmen der Bilder monokulare Videos sind.

11. Verfahren zur Verfolgung mehrerer Objekte nach einem der vorangegangenen Ansprüche, wobei der Schritt (E2) der Objektdetektion in jedem der Bilder mittels eines Convolutional Neural Network durchgeführt wird.

12. Verfahren zur Verfolgung mehrerer Objekte nach einem der vorangegangenen Ansprüche, wobei der Schritt (E3) der Begrenzung des detektierten Objekts die Bestimmung eines Begrenzungsrahmens umfasst, welcher das mindestens eine detektierte Objekt umschließt.

13. Verfahren zur Verfolgung mehrerer Objekte nach einem der vorangegangenen Ansprüche, wobei im Schritt (E9) der Zuweisung an das Kandidaten-Tupel, welches den niedrigsten Kohärenzfehlerindex (IEC) aufweist, der niedrigste Kohärenzfehlerindex (IEC) kleiner als ein vorbestimmter Kohärenzfehlerschwellenwert ist.

14. Computerprogrammprodukt, welches Programmanweisungen umfasst, welche die Schritte des Verfahrens der Bestimmung nach einem der Ansprüche 1 bis 13 durchführen, wenn die Programmanweisungen von einem Computer ausgeführt werden.

## Claims

1. Method for tracking multiple objects in time acquisitions of images composed of a time sequence of images acquired consecutively, said method comprising:
- a step (E1) of receiving n consecutively acquired images of said sequence, n being greater than or equal to 3;
- a step (E2) of detecting an object in each of said images;
- a step (E3) of delimiting the detected object, in a reference system of the image in which said object was detected;
- a step (E4) of associating, under a unique tracking identifier specific to a tracked object of a frame delimiting a first image of the sequence of images, with a frame delimiting a second image of said sequence, said first and second images being in particular consecutive, according to a minimum overlap threshold;
- a step (E5) of determining a current speed of said tracked object;
said method being **characterised in that** it comprises iterating the following steps based on the frames with no identifier remaining until no multiplet satisfies a condition related to a coherence error threshold:
- a step (E6) of determining a frame delimiting a detected object without an associated identifier among the n images;
- a step (E7) of determining a set of candidate sequential multiplets of k frames (d1, d2, d3) delimiting a detected object with no identifier, with k greater than or equal to 3 and k less than or equal to n, each multiplet comprising as a first element a frame (d1) with no identifier of an image h among the n images, as a second element a frame (d2) with no identifier of an image i among the n images, with i greater than h, and as a third element a frame (d3) with no identifier of an image j among the n images , with j greater than i;
- a step (E8) of calculating a coherence error index (CEI) for each candidate sequential multiplet;
- a step (E9) of assigning to the candidate multiplet having the lowest coherence error index (CEI) another unique tracking identifier specific to another tracked object and associating under said other unique tracking identifier said k frames (d1,d2,d3) of the multiplet; and
- a step (E10) of determining a current speed of said other tracked object.

2. Method for tracking multiple objects according to the preceding claim, wherein, for each candidate multiplet, the coherence error index (CEI) is calculated according to a relative positioning of said frames (d1, d2, d3) with no identifier of said multiplet.

3. Method for tracking multiple objects according to the preceding claim, wherein the relative positioning of said frames (d1, d2, d3) with no identifier of said multiplet is determined relative to the positioning of one single reference point specific to each of said frames (d1, d2, d3) with no identifier.

4. Method for tracking multiple objects according to the preceding claim, wherein the unique reference point of each of said frames (d1, d2, d3) with no identifier is the centre of each of said frames (d1, d2, d3) with no identifier.

5. Method for tracking multiple objects according to any one of claims 3, 4, wherein said unique reference points specific to each of said frames (d1, d2, d3) with no identifier are determined by a convolutional neural network that has learned from an image base comprising truncated objects.

6. Method for tracking multiple objects according to any one of claims 3 to 5, wherein the coherence error index (CEI) is calculated as a function of k-1 vectors (v1, v2) each connecting the reference point of an element to the reference point of the following element, said vectors (v1, v2) being in particular a function of a time difference between the acquisitions of the two images, by calling
- first vector (v1), the vector connecting the reference point of the first element (d1) and the reference point of the second element (d2) of the multiplet, said first vector being in particular a function of a time difference between the two acquisitions of the images h and i, and
- second vector (v2), the vector connecting the reference point of the second element (d2) and the reference point of the third element (d3) of the multiplet, said second vector being in particular a function of a time difference between the two acquisitions of the images i and j.

7. Method for tracking multiple objects according to the preceding claim, wherein the coherence error index (CEI) is calculated according to an angle (α) between said first (v1) and second (v2) vectors, and in particular a ratio between the first and second vector, such that $CEI = \left(1-cos\left(α\right)\right) \left|1-\frac{\left|v1\right|}{\left|v2\right|}\right|$.

8. Method for tracking multiple objects according to claim 6, wherein the coherence error index (CEI) is calculated as a function of the mean *v̅* of said k-1 vectors (vi), such that $CEI \left(v1,…,vk-1\right) = \frac{1}{k - 1} {\sum }_{i} \frac{\left‖vi-\overline{v}\right‖}{\left‖\overline{v}\right‖}$.

9. Method for tracking multiple objects according to any one of the preceding claims, wherein said detected objects are vehicles or pedestrians.

10. Method for tracking multiple objects according to any one of the preceding claims, wherein the time acquisitions of images are monocular videos.

11. Method for tracking multiple objects according to any one of the preceding claims, wherein step (E2) of detecting an object in each of said images is carried out by means of a convolutional neural network.

12. Method for tracking multiple objects according to any one of the preceding claims, wherein step (E3) of delimiting the detected object comprises determining a delimitation frame encompassing said at least one detected object.

13. Method for tracking multiple objects according to any one of the preceding claims, wherein, in step (E9) of assigning to the candidate multiplet having the lowest coherence error index (CEI), said lowest coherence error index (CEI) is less than a predetermined coherence error threshold.

14. Computer program product comprising the program instructions implementing the steps of the determination method according to any one of claims 1 to 13, when the program instructions are executed by a computer.
